# EUROPÄISCHE PATENTANMELDUNG

(11) **EP 3 925 502 A1**
(43) Veröffentlichungstag der Anmeldung: **22.12.2021**
(21) Anmeldenummer: 20180797.1
(22) Anmeldetag: 18.06.2020
(51) Int. Cl.: A47L 7/00, A47L 9/20, B23Q 11/00

(54) **STAUBSAMMELVORRICHTUNG FÜR EINE WERKZEUGMASCHINE**

(71) Anmelder: Hilti Aktiengesellschaft, 9494 Schaan (LI)
(72) Erfinder: Plank, Uto, 85354 Freising (DE)
(74) Vertreter: Hilti Aktiengesellschaft Corporate Intellectual Property

(57) **Zusammenfassung**

Die vorliegende Erfindung betrifft eine Staubsammelvorrichtung für eine Werkzeugmaschine, wobei die Staubsammelvorrichtung einen Lamellenfilter, eine drehbare Welle, sowie einen Lamellenhalter aufweist. In dem Sammelbehälter der Staubsammelvorrichtung können die Lamellen des Filters durch eine Drehbewegung der Welle, die durch den Lamellenhalter vermittelt wird, in eine axiale Bewegung versetzt werden, die dann unterbrochen wird, wenn ein erstes Profil der Welle und ein zweites Profil des Lamellenhalters gegeneinander bewegt werden und nicht in Eingriff miteinander vorliegen. Dadurch wird eine Rückkehr der Lamellen in ihre Ursprungsposition ermöglicht, wobei durch die Rückkehr der Lamellen in diese Ursprungsposition eine Erschütterung der Lamellen bewirkt wird, die zu einer Abreinigung des Filters führt. In weiteren Aspekten betrifft die Erfindung eine Werkzeugmaschine, die eine vorgeschlagene Staubsammelvorrichtung aufweisen kann, sowie ein Verfahren zum Betrieb einer Werkzeugmaschine und zur Abreinigung eines Filters.

## Beschreibung

Die vorliegende Erfindung betrifft eine Staubsammelvorrichtung für eine Werkzeugmaschine, wobei die Staubsammelvorrichtung einen Lamellenfilter, eine drehbare Welle, sowie einen Lamellenhalter aufweist. In dem Sammelbehälter der Staubsammelvorrichtung können die Lamellen des Filters durch eine Drehbewegung der Welle, die durch den Lamellenhalter vermittelt wird, in eine axiale Bewegung versetzt werden, die dann unterbrochen wird, wenn ein erstes Profil der Welle und ein zweites Profil des Lamellenhalters gegeneinander bewegt werden und nicht in Eingriff miteinander vorliegen. Dadurch wird eine Rückkehr der Lamellen in ihre Ursprungsposition ermöglicht, wobei durch die Rückkehr der Lamellen in diese Ursprungsposition eine Erschütterung der Lamellen bewirkt wird, die zu einer Abreinigung des Filters führt. In weiteren Aspekten betrifft die Erfindung eine Werkzeugmaschine, die eine vorgeschlagene Staubsammelvorrichtung aufweisen kann, sowie ein Verfahren zum Betrieb einer Werkzeugmaschine und zur Abreinigung eines Filters.

### Hintergrund der Erfindung:

Im Stand der Technik sind Werkzeugmaschinen bekannt, bei denen Staub, der bei der Arbeit mit der Werkzeugmaschine entsteht, durch eine interne Staubabsaugung abgesaugt werden kann. Der gesammelte Staub kann beispielsweise in einer Staubsammelvorrichtung innerhalb der Werkzeugmaschine aufgefangen bzw. bis zu einer Leerung der Vorrichtung gesammelt werden. Die Werkzeugmaschine mit Staubabsaugung können Filter, insbesondere Kleinstfilter, aufweisen, um aus dem Luftstrom Gesteins- und/oder Staubpartikel abzuscheiden. Bei diesen Filtern handelt es sich häufig um Filter, die Lamellen aufweisen. Diese werden im Sinne der Erfindung vorzugsweise als "Lamellenfilter" bezeichnet. Erfahrungsgemäß können sich diese Filter leicht mit Staub oder groben Schmutz zusetzen, was nachteiligerweise dazu führen kann, dass die Staubabsaugung an Leistung verliert oder die Absaugkanäle verstopfen. Insbesondere kann das unerwünschte Zusetzen des Filters dazu führen, dass eine Befüllungskapazität der Staubsammelvorrichtung nicht optimal genutzt werden kann.

Im Stand der Technik sind verschiedene Verfahren bekannt, mit denen ein Filter in einer Staubsammelvorrichtung einer Werkzeugmaschine abgereinigt werden kann. Die meisten dieser Verfahren stellen mechanische Abreinigungsverfahren dar, die mit einer Reihe von Nachteilen behaftet sind. Beispielsweise wird im Stand der Technik vorgeschlagen, die Lamellen des Filters abzukehren, um den Filter zu reinigen. Allerdings kann es passieren, dass sich die dafür verwendete Kehrvorrichtung nicht mehr bewegen kann, wenn die Sammelvorrichtung mit Staub gefüllt ist. Dadurch kann nachteiligerweise die Funktionsfähigkeit der Filterabreinigung beeinträchtigt werden. Ferner kann es zu Beschädigungen an einzelnen Bestandteilen der Staubsammelvorrichtung kommen, wenn die Staubbox teilweise oder ganz mit Staub befüllt ist. Als Kehrvorrichtungen sind im Stand der Technik beispielsweise Abstreifer, Schieber oder Bürsten bekannt.

Ferner wird im Stand der Technik ein Abklopfen der gesamten Staubsammelvorrichtung vorgeschlagen. Allerdings führt dieses Abklopfen der gesamten Staubbox häufig zu mechanischen Beeinträchtigungen der Staubsammelvorrichtung oder ihrer Komponenten. Das Abklopfen der Staubsammelvorrichtung wirkt bei den bekannten Lösungen überwiegend auf das Gehäuse des Sammelbehälters und führt oft nicht zu einer ausreichenden Abreinigung des Filters.

Eine weitere Abreinigungsmöglichkeit, die aus dem Stand der Technik bekannt ist, besteht darin, den Filter durch einen Umkehr-Luftstrom "abzublasen". Dabei wird die Strömungsrichtung des Absaug-Luftstroms durch ein Abschalten oder eine Reduzierung des Unterdrucks umgekehrt, so dass der Filter für einen kurzen Moment von einem Luftstrom durchströmt wird, dessen Richtung entgegengesetzt ist zu der üblichen Strömungsrichtung im Absaugfall. Allerdings hat sich gezeigt, dass die Filterabreinigung durch einen Umkehr-Luftstrom insbesondere dann nicht hilft und zu dem gewünschten Effekt führt, wenn größere Staub- oder Gesteinsbrocken in dem Strömungskanal verklemmt vorliegen. Denn üblicherweise ist der Umkehr-Luftstrom zumeist nicht stark genug, um verklemmte Staub- oder Gesteinsbrocken aus dem Strömungskanal zu lösen bzw. zu befreien. Nachteilig an der Abreinigung durch einen Umkehr-Luftstrom ist ferner, dass in dem Moment der Unterdruckunterbrechung auch die Staubabsaugung unterbrochen werden muss. In diesem Abreinigungszeitraum ist der Nutzer der Werkzeugmaschine der vollen Staubbelastung ausgesetzt, die bei der Arbeit mit der Werkzeugmaschine entsteht.

Es ist somit ein Anliegen der vorliegenden Erfindung eine Vorrichtung zur verbesserten Abreinigung des Filters in einer Staubsammelvorrichtung bereitzustellen. Darüber hinaus soll mit der Erfindung eine Werkzeugmaschine mit einer bereitzustellenden Staubsammelvorrichtung abgegeben werden, sowie ein Verfahren zum Betrieb einer Werkzeugmaschine bzw. ein Verfahren zur Abreinigung eines Filters in einer Staubsammelvorrichtung in einer Werkzeugmaschine. Mit der Erfindung sollen die vorstehend beschriebene Nachteile und Mängel des Standes der Technik überwunden und insbesondere eine effiziente und wirksame Abreinigung des Filters in einer Staubsammelvorrichtung einer Werkzeugmaschine ermöglicht werden. Die Abreinigung soll ausreichend stark sein, um beispielsweise Staub- oder Gesteinsbrocken zu befreien, die sich in einem Strömungskanal der Werkzeugmaschine verklemmt haben. Es würde von der Fachwelt begrüßt werden, wenn eine etwaige mechanische Belastung, die mit der Abreinigung einhergeht, auf den Bereich des Filters und umliegender Komponenten beschränkt bliebe und insbesondere nicht auf das Gehäuse wirkt. Darüber hinaus soll es mit der Erfindung möglich sein, auf die Verwendung von unflexiblen und/oder wartungsanfälligen Kehrvorrichtungen zu verzichten.

Die Aufgabe wird durch den Gegenstand der unabhängigen Ansprüche gelöst. Vorteilhafte Ausführungsformen zum Gegenstand des unabhängigen Anspruchs finden sich in den abhängigen Unteransprüchen.

### Beschreibung der Erfindung:

Die Aufgabe wird gelöst durch eine Staubsammelvorrichtung für eine Werkzeugmaschine, wobei die Staubsammelvorrichtung einen Sammelbehälter zur Aufnahme des Staubes aufweist. Die Staubsammelvorrichtung ist dadurch gekennzeichnet, dass in dem Sammelbehälter ein Filter mit Lamellen, sowie eine drehbare Welle angeordnet vorliegen, wobei die Welle mit einem Lamellenhalter in Verbindung steht, wobei der Lamellenhalter durch eine Drehbewegung der Welle in eine axiale Richtung bewegbar ist und durch eine Rückbewegung eine Abreinigung des Filters bewirkt. Es ist im Sinne der Erfindung insbesondere bevorzugt, dass durch die Rückkehr der Lamellen in ihre Ursprungsposition eine Erschütterung der Lamellen hervorgerufen wird, die zu einer Abreinigung des Filters führt. Insofern wird mit der Erfindung eine Reinigungsmöglichkeit für einen Lamellenfilter vorgestellt, wobei mit dem Lamellenfilter ein staubbeladener Luftstrom in einer Werkzeugmaschine gefiltert werden kann. Durch die kompakte, mechanische und einfach zu bedienende Konstruktion wird mit der Erfindung vorteilhafterweise eine besonders robuste und wartungsarme Staubbox für eine Werkzeugmaschine bereitgestellt. Tests haben gezeigt, dass die Erfindung eine kostengünstige technische Lösung zur Filterabreinigung darstellt, die insbesondere ohne eine spezielle Kehrvorrichtung, ein Abklopfen der gesamten Staubbox oder einen Umkehr-Luftstoß auskommt. Somit wendet sich die vorgeschlagene Staubsammelvorrichtung von solchen Lösungen, die aus dem Stand der Technik bekannt sind, ab und beschreitet neue Wege im Bereich der Abreinigung eines Filters in einer Staubsammelvorrichtung in einer Werkzeugmaschine.

Ein wesentlicher Vorteil der Erfindung besteht darin, dass die Abreinigung des Filters durch die Erschütterung der Lamellen direkt am Ort der Verschmutzung bzw. am Ort der Zusetzung des Filters erfolgt. Durch diese unmittelbare Einwirkung kann eine hohe Effizienz der Abreinigung gewährleistet werden. Insbesondere wird auf die vorgeschlagene Weise eine Einwirkung auf das Gehäuse der Staubsammelvorrichtung vermieden. Ein weiterer Vorteil der Erfindung besteht darin, dass der Rüttelhub und die Rüttelfrequenz der Filterabreinigung eingestellt werden können. Insbesondere kann die Beschleunigung des Lamellenhalters durch die Kraft der Feder eingestellt werden, wobei vorteilhafterweise auch sehr hohe Beschleunigungswerte erreicht werden können. Dies fördert eine effiziente Abreinigung des Filters und eine Reinigungswirkung der vorgeschlagenen Vorrichtung.

Es ist im Sinne der Erfindung bevorzugt, dass in dem Sammelbehälter ferner eine Feder vorliegt, gegen die der Lamellenhalter bei seiner Bewegung in axiale Richtung gedrückt werden kann. Die Feder ist vorzugsweise dazu eingerichtet, beim Zusammendrücken Energie zu speichern und diese wieder abzugeben, wenn Steuerprofile die Entspannung ermöglichen. Dadurch ist es vorteilhafterweise möglich, dass die Rückbewegung des Lamellenhalters mit Hilfe der Feder beeinflusst und/oder gesteuert werden kann.

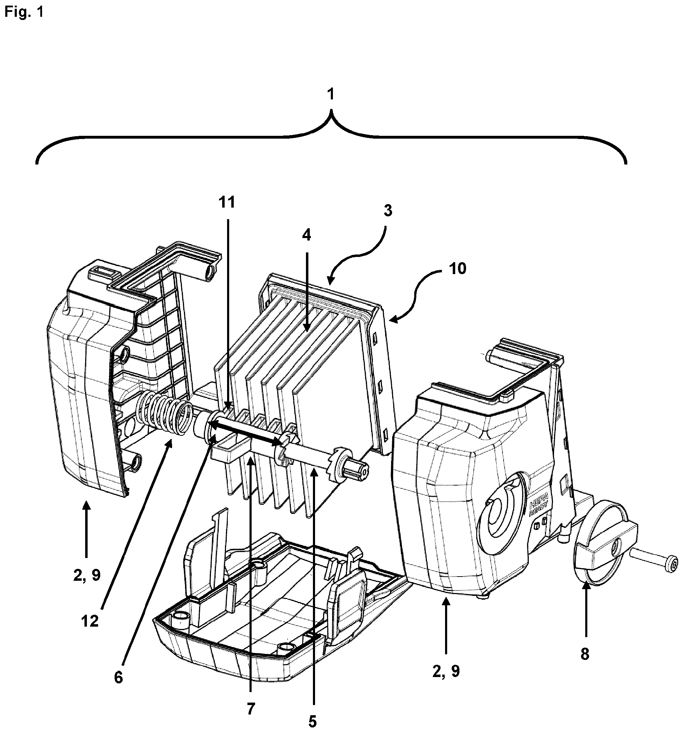

Es ist im Sinne der Erfindung bevorzugt, dass, die Welle ein erstes Profil aufweist und der Lamellenhalter ein zweites Profil aufweist, wobei das erste Profil und das zweite Profil zueinander korrespondierend ausgebildet sind. Auf diese Weise ist es vorteilhafterweise möglich, dass das erste und das zweite Profil miteinander in Eingriff gelangen können. Es ist im Sinne der Erfindung bevorzugt, dass das zweite Profil des Lamellenhalters mit dem ersten Profil der Welle in Eingriff gelangen kann, so dass der Lamellenhalter durch eine Drehbewegung der Welle in eine axiale Bewegung versetzbar ist. Mit anderen Worten ist es im Sinne der Erfindung bevorzugt, dass das zweite Profil des Lamellenhalters mit dem ersten Profil der Welle in Eingriff gelangen kann, so dass der Lamellenhalter durch eine Drehbewegung der Welle in eine axiale Richtung bewegt wird. Es ist im Sinne der Erfindung bevorzugt, dass auf der Welle axial verschiebbar ein Lamellenhalter angeordnet ist. Vorzugsweise kann der Lamellenhalter axial in Bezug auf die Welle verschoben werden. Durch diese axiale Verschiebbarkeit des Lamellenhalters kann die Umwandlung der Drehbewegung der Welle in die Axialbewegung des Lamellenhalters ermöglicht werden. Die axiale Bewegung des Lamellenhalters erfolgt insbesondere aus einer Ursprungsposition heraus entlang einer Achse, die im Wesentlichen parallel verläuft zu einer gedachten zentralen Achse, die vorzugsweise mittig durch die Welle verläuft. Die axiale Bewegung des Lamellenhalters wird in Figur 1 durch den Doppelpfeil symbolisiert.

Es ist im Sinne der Erfindung bevorzugt, dass der Lamellenhalter durch die axiale Bewegung gegen eine Feder gedrückt wird, die vorzugsweise ebenfalls entlang der gedachten Zentralachse der Welle in dem Sammelbehälter der vorgeschlagenen Staubsammelvorrichtung angeordnet vorliegt. Die Bewegung der drehbaren Welle wird insbesondere unter Vermittlung des ersten und des zweiten Profils in eine axiale Bewegung des Lamellenhalters umgewandelt. Vorzugsweise ist der Lamellenhalter drehfest gelagert. Es ist im Sinne der Erfindung bevorzugt, dass das erste und das zweite Profil als Profil und Gegenprofil zueinander ausgebildet sind. Beispielsweise können das erste und das zweite Profil als zueinander korrespondierend ausgebildete Sägezahnprofile ausgebildet sein. Als solche können sie in Eingriff miteinander vorliegen. Sie können im Falle einer Bewegung eines der beiden Profile auch gegeneinander bewegt werden, wobei es zu ruckartigen Bewegungsabläufen der beteiligten Partner kommen kann, wenn eines der Profile an einem Ende eines Sägezahns ankommt und in eine tieferliegende Position zurückfällt. Vorzugsweise umfassen die Sägezahnprofile schiefe Ebenen als Kontaktflächen. Diese Kontaktflächen der Profile liegen in Kontakt zueinander vor, wenn die Profile in Eingriff miteinander vorliegen. Bei einer Relativbewegung der Profile zueinander gleiten die Kontaktflächen aneinander vorbei, bis das Ende bzw. der höchste Punkt einer Kontaktfläche erreicht ist. Die gegenüberliegende Kontaktfläche des anderen Profils verliert dann den Kontakt zu der endenden Kontaktfläche und fällt zurück auf die sich in Umlaufrichtung anschließende Kontaktfläche bzw. deren tiefsten Punkt. Durch die Höhendifferenz des höchsten Punktes der einen Kontaktfläche und des tiefsten Punkts der angrenzenden Kontaktfläche kommt es zu einer ruckartigen Bewegung des Lamellenhalters, die ferner zu einer Rückbewegung des Lamellenhalters in seine Ausgangsposition führt. Es ist in Sinne der Erfindung bevorzugt, dass die Rückbewegung des Lamellenhalters in einer entgegengesetzten Richtung zu der anfänglichen, axialen Bewegung des Lamellenhalters erfolgt. Diese Rückbewegung kann vorteilhafterweise von der Feder unterstützt bzw. gesteuert werden. Durch Mitnahmemittel des Lamellenhalters werden auch die Filterlamellen durch die ruckartige Rückbewegung des Lamellenhalters mitgenommen und sie können in ihre Ausgangsposition zurückkehren. Dies erfolgt vorzugsweise im Wege einer Erschütterung oder einer ruckartigen Bewegung, die eine Abreinigung der Lamellen des Filters bewirkt. Insbesondere kann durch die stoßartige Rückbewegung des Lamellenhalters der auf den Lamellen befindliche oder haftende Staub bzw. Filterkuchen abgeschüttelt werden, so dass der Filter seine ursprüngliche Reinigungskraft wiedererlangen kann.

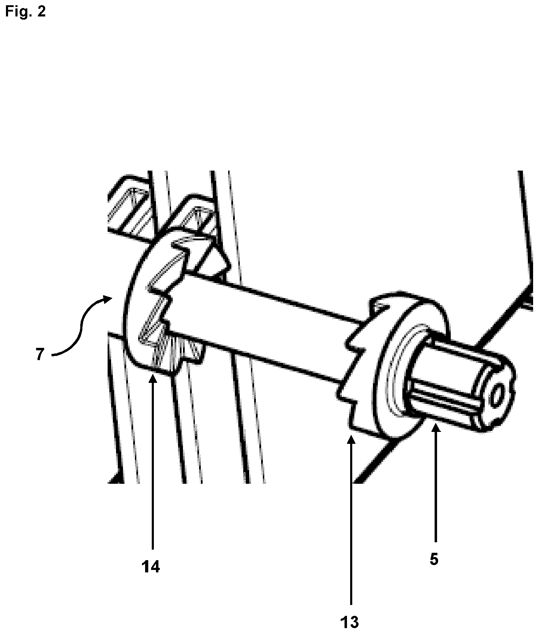

Es ist im Sinne der Erfindung ganz besonders bevorzugt, dass die Welle mit dem ersten Profil drehbar ausgebildet ist, während der Lamellenhalter mit dem zweiten Profil drehfest gelagert ist. Beispiele der zueinander korrespondierend ausgebildeten Profile sind in Figur 2 dargestellt. Es ist im Sinne der Erfindung bevorzugt, dass die Profile einander zugewandt sind, so dass sie miteinander zusammenwirken können. Vorzugsweise umfasst die Welle einen zylinderförmig ausgebildeten Abschnitt, der in eine Öffnung bzw. einen Hohlraum im Inneren des Lamellenhalters eingeführt werden kann. Es ist im Sinne der Erfindung bevorzugt, dass der Lamellenhalter zwischen der Welle und der Feder angeordnet vorliegt. Vorzugsweise liegt das zweite Profil des Lamellenhalters auf der der Welle zugewandten Seite des Lamellenhalters vor. Auf der der Feder zugewandten Seite des Lamellenhalters kann ein umlaufender Kragen vorliegen, der vorzugsweise dazu eingerichtet ist, eine Kraft auf die Feder zu übertragen. Die Feder kann vorzugsweise als Druck- oder Spiralfeder ausgebildet sein.

Es ist im Sinne der Erfindung bevorzugt, dass der Lamellenhalter Mitnahmemittel aufweist, die in die Lamellen des Filters bzw. die Freiräume zwischen den Filterlamellen eingreifen können. Mit anderen Worten ist es im Sinne der Erfindung bevorzugt, dass die Mitnahmemittel dazu eingerichtet sind, in die Lamellen des Filters bzw. in Freiräume zwischen den Lamellen des Filters einzugreifen. Die Mitnahmemittel können beispielweise als Finger oder U-förmige Haken ausgebildet sein und in die Lamellenzwischenräume eingreifen. Vorzugsweise können die Mitnahmemittel besonders verschleißschonend aus einem Kunststoff gebildet sein, so dass das empfindliche Material der Filterlamellen nicht beschädigt oder übermäßig strapaziert wird. Durch diese Mitnahmemittel können die Lamellen des Filters von der axialen Bewegung des Lamellenhalters mitgenommen bzw. mitgeführt werden. Durch die ruckartige Bewegung des Lamellenhalters, die durch die Relativbewegung des ersten und des zweiten Profils erzeugt werden kann, wird eine Erschütterung der Lamellen des Filters hervorgerufen, die vorteilhafterweise dazu führt, dass der auf den Lamellen haftende Staub abgeschüttelt wird. Somit wird durch die mechanische Konstruktion der vorgeschlagenen Staubsammelvorrichtung vorteilhafterweise eine Abreinigungswirkung hervorgerufen. Diese Abreinigungswirkung wird insbesondere durch eine ruckartige Rückbewegung des Lamellenhalters erzeugt, wenn das erste Profil der Welle und das zweite Profil des Lamellenhalters bei ihrer Bewegung gegeneinander nicht mehr in Eingriff miteinander vorliegen.

Es ist im Sinne der Erfindung ganz besonders bevorzugt, dass in dem Sammelbehälter der vorgeschlagenen Staubsammelvorrichtung ein Filter mit Lamellen, sowie eine drehbare Welle mit einem ersten Profil angeordnet vorliegen, wobei die Welle über das erste Profil mit einem drehfest gelagerten Lamellenhalter in Verbindung steht, wobei der Lamellenhalter ein zweites Profil aufweist, das mit dem ersten Profil der Welle in Eingriff gelangen und durch eine Drehbewegung der Welle in eine axiale Richtung aus einer Ursprungsposition heraus bewegt werden kann, wobei der Lamellenhalter durch seine Rückbewegung vorteilhafterweise eine Abreinigung des Filters bewirkt.

Es ist im Sinne der Erfindung bevorzugt, dass der Lamellenhalter und der Filter bzw. seine Lamellen in einem formschlüssigen Eingriff miteinanderstehen. Durch Eingriff zwischen den Lamellen des Filters und dem Lamellenhalter kann die Drehbewegung der Welle in eine axiale Bewegung des Filters bzw. der Filterlamellen umgewandelt werden, wobei der Lamellenhalter bevorzugt mit der Welle verbunden vorliegt. Vorzugsweise erfolgt die axiale Bewegung im Wesentlichen parallel zu einer zentralen Achse der Welle. Der Begriff "im Wesentliche parallel" stellt für den Fachmann dabei keinen unklaren Begriff dar, weil der Fachmann weiß, dass mit der Formulierung eine Bewegung der Filterlamellen im Wesentlichen parallel zu einer Achsrichtung der Welle gemeint ist, wobei kleinere Abweichungen von der exakten mathematischen Parallelität zu tolerieren sind.

Es ist im Sinne der Erfindung bevorzugt, dass die Welle der vorgeschlagenen Staubsammelvorrichtung im Wesentlichen horizontal in dem Sammelbehälter angeordnet vorliegt. Sie kann von außen über einen Drehgriff in Drehung versetzt werden. Diese Drehung stellt diejenige Drehbewegung der Welle dar, mit der die Lamellen des Filters unter Vermittlung des Lamellenhalters in eine axiale Bewegung versetzt werden können. Insbesondere können die einzelnen Lamellen des Filters von den Mitnahmemitteln des Lamellenhalters, der mit der Welle in Verbindung steht, mitgeführt werden, so dass die Rotationsbewegung der Welle in eine axiale Bewegung der einzelnen Lamellen des Filters umgewandelt wird. Der Drehgriff kann beispielsweise mit einem Befestigungsmittel, wie einer Schraube, an der Welle befestigt werden. Insbesondere kann die vorgeschlagene Staubsammelvorrichtung ein Gehäuse aufweisen, wobei der Drehgriff beispielsweise in einer Vertiefung des Gehäuses drehbar gelagert werden kann. Das Gehäuse kann aus zwei Teilhälften bestehen, die zu dem Gesamtgehäuse der Staubsammelvorrichtung zusammengefügt werden können. Das Gehäuse bzw. seine zwei Teilhälften bilden bzw. umschließen vorteilhafterweise einen geschlossenen Hohl- oder Innenraum, in dem der Staub, der bei Betrieb einer Werkzeugmaschine entsteht, gesammelt werden kann. Die vorgeschlagene Staubsammelvorrichtung kann insbesondere als Komponente einer Werkzeugmaschine ausgebildet sein. Die vorgeschlagene Staubsammelvorrichtung kann im Sinne der Erfindung vorzugsweise als "Staubbox" oder als *"Dust Removal-Modul"* bezeichnet werden.

Wenn bei Betrieb der Werkzeugmaschine Staub anfällt, kann dieser Staub mittels einer Staubabsaugung, die ebenfalls Bestandteil der Werkzeugmaschine sein kann, abgesaugt werden. Dazu kann die Staubabsaugung einen Unterdruck erzeugen, mit dem ein Luftstrom erzeugt werden kann, mit dem der Staub aus einem Arbeitsbereich der Werkzeugmaschine entfernt werden kann. Der staubbeladene Luftstrom wird vorzugsweise in Richtung der Staubsammelvorrichtung geführt. Die Staubsammelvorrichtung weist vorzugsweise eine Öffnung auf, durch die der Luftstrom in die Staubsammelvorrichtung eintreten kann. Es ist im Sinne der Erfindung bevorzugt, dass der Filter in diesem Öffnungs- oder Eingangsbereich der Staubsammelvorrichtung vorliegt. Es kann passieren, dass sich der Filter bei langanhaltendem Betrieb der Werkzeugmaschine oder bei einer hohen Staubbeladung des Luftstroms zusetzt. In diesem Fall bildet sich beispielsweise ein fester Filterkuchen aus, der dazu führen kann, dass die Absaugung an Saugleistung verliert und die Ansaugkanäle verstopfen. Außerdem kann durch das Zusetzen des Filters ggf. die Kapazität der Staubsammelvorrichtung bzw. ihres Sammelbehälters nicht optimal genutzt werden.

Vorteilhafterweise kann mit der Erfindung eine Möglichkeit für eine schnelle, kostengünstige, wartungsarme und effektive Abreinigung des Filters bereitgestellt werden. Es ist im Sinne der Erfindung bevorzugt, dass der Abreinigungsvorgang durch eine Betätigung eines Drehgriffs der Staubsammelvorrichtung gestartet wird. Vorzugsweise wird durch die Betätigung des Drehgriffs die Welle innerhalb des Sammelbehälters der Staubsammelvorrichtung in eine Drehung versetzt. Es ist im Sinne der Erfindung bevorzugt, dass der Lamellenhalter Mitnahmemittel aufweist, die in Eingriff gelangen können mit den Lamellen des Filters bzw. mit den Freiräumen zwischen den Filterlamellen. Es ist im Sinne der Erfindung bevorzugt, dass die Drehbewegung der Welle in eine axiale Bewegung der Lamellen des Filters umgewandelt werden kann.

Vor Beginn der Drehbewegung liegen die Lamellen in Bezug auf die Welle bzw. den Lamellenhalter oder seiner Mitnahmemittel in einer Ursprungs- oder Ausgangsposition vor. Durch die axiale Bewegung werden die Filterlamellen aus ihrer Ausgangsposition herausbewegt, insbesondere entlang einer Achsrichtung der Welle. Beispielsweise können sich die Lamellen durch ihre axiale Bewegung in seitlicher Richtung um einen Länge d nach rechts oder links bewegen. Die Länge d stellt dann vorzugsweise den Abstand einer Lamelle zu ihrer Ausgangsposition dar. Es ist im Sinne der Erfindung bevorzugt, dass jede Lamelle eine eigene Ursprungsposition aufweist. Beispielsweise kann der Lamellenhalter drei bis zehn Mitnahmemittel aufweisen. Es hat sich gezeigt, dass Lamellenhalter mit fünf Mitnahmemittel besonders gut für die Zwecke der Erfindung geeignet sind. Es ist im Sinne der Erfindung bevorzugt, dass die Anzahl der Mitnahmemittel des Lamellenhalters mit einer Anzahl der Lamellen des Filters korreliert. Diese Korrelation kann im Sinne der Erfindung bedeuten, dass die Anzahl der Mitnahmemittel des Lamellenhalters mit der Anzahl der Lamellen des Filters gleich ist. Es ist im Sinne der Erfindung aber ganz besonders bevorzugt, dass die Anzahl der Lamellen des Filters um den Betrag 1 größer ist als die Anzahl der Mitnahmemittel des Lamellenhalters. Dadurch ist es vorteilhafterweise möglich, dass jedes Mitnahmemittel in einen Zwischenraum zwischen den Filterlamellen eingreifen und die Lamelle während der Drehbewegung der Welle bzw. während der Axialbewegung des Lamellenhalters mitführen kann. Dadurch wird vorzugsweise die axiale Bewegung der Filterlamellen erzeugt, die zum Zurückspringen und zur Abreinigung des Filters führt. Mit anderen Worten kann es im Sinne der Erfindung bevorzugt sein, dass der Lamellenhalter eine Anzahl von n Mitnahmemitteln und der Filter eine Anzahl von n+1 Lamellen aufweist.

Durch das Zurückspringen bzw. Zurückschnellen der Lamellen des Filters kommt es vorzugsweise zu deren Erschütterung, wodurch der Staub bzw. Filterkuchen von den Lamellen gelöst und/oder abgeschüttelt werden kann. Insbesondere ermöglicht die Erschütterung eine wirksame und effiziente (Ab-)Reinigung der Filterlamellen bzw. des Filters. Die oft ruckartige Bewegung des Lamellenhalters führt vorteilhafterweise zu einer Erschütterung der Lamellen, durch die sich die im verstopften oder zugesetzten Filter der Staub bzw. der Filterkuchen lösen kann. Insbesondere wird durch das vorteilhafte Zusammenwirken der drehbaren Welle, des Lamellenhalters und des Filters eine Abreinigungswirkung hervorgerufen.

Es ist im Sinne der Erfindung bevorzugt, dass der Sammelbehälter einen Drehgriff aufweist, mit dem die Welle in eine Drehung versetzt werden kann. Mit anderen Worten ist es im Sinne der Erfindung bevorzugt, dass der Drehgriff dazu eingerichtet ist, die Welle in eine Drehung zu versetzen. Diese Drehbewegung kann insbesondere durch eine bevorzugt manuelle Betätigung durch den Nutzer der Werkzeugmaschine erfolgen. Es kann in einer alternativen Ausgestaltung der Erfindung auch bevorzugt sein, dass die Welle von Antriebsmitteln angetrieben wird. Dazu kann ein Elektromotor vorgesehen sein, der mit einem Schalter aktiviert oder deaktiviert werden kann. Dieser Schalter kann in der alternativen Ausgestaltung der Erfindung in dem Bereich am Gehäuse der Staubsammelvorrichtung angeordnet sein, in dem in der "manuellen Ausgestaltung" der Erfindung der Drehgriff vorgesehen ist. Der Schalter kann aus ergonomischen Gründen aber auch an verschiedenen anderen Stellen angeordnet vorliegen.

Die Erfindung ist vorzugsweise in dem technischen Gebiet der Staubentfernung aus einem Arbeitsbereich einer Werkzeugmaschine angesiedelt. Der Arbeitsbereich der Werkzeugmaschine stellt vorzugsweise denjenigen Bereich dar, in dem die mit der Werkzeugmaschine zu verrichtende Arbeit geleistet wird. Dies erfolgt zumeist unter Zuhilfenahme eines Werkzeugs. Wenn es sich bei der Werkzeugmaschine beispielsweise um einen Bohrhammer handelt, kann das Werkzeug zum Beispiel von einem Bohr- oder Meißelwerkzeug gebildet werden. Der Bereich, in dem das Bohr- oder Meißelwerkzeug als Werkzeug der Werkzeugmaschine in Kontakt mit einem zu bearbeitenden Untergrund gelangt, wird im Sinne der Erfindung vorzugsweise als "Arbeitsbereich der Werkzeugmaschine" bezeichnet. Es ist im Sinne der Erfindung bevorzugt, dass in diesem Arbeitsbereich der Staub entsteht, der vorzugsweise mit Hilfe der vorliegenden Erfindung gesammelt werden soll. Dazu kann die Werkzeugmaschine eine Staubabsaugung umfassen. Es ist im Sinne der Erfindung bevorzugt, dass die Staubabsaugung eine Vorrichtung darstellt, die dazu eingerichtet ist, einen Luftstrom bzw. einen Unterdruck zu erzeugen und den Staub, der im Arbeitsbereich der Werkzeugmaschine bei deren Betrieb entstehen kann, mit dem Luftstrom abzusaugen.

Die Erfindung betrifft in zweiten Aspekt eine Werkzeugmaschine mit einer Staubabsaugung zum Abführen von Partikel aus einem Arbeitsbereich der Werkzeugmaschine. Es ist insbesondere vorgesehen, dass die Werkzeugmaschine eine vorgeschlagene Staubsammelvorrichtung aufweist. Die Werkzeugmaschine ist dadurch gekennzeichnet, dass in dem Sammelbehälter ein Filter mit Lamellen, sowie eine drehbare Welle angeordnet vorliegen, wobei die Welle mit einem Lamellenhalter in Verbindung steht, wobei der Lamellenhalter durch eine Drehbewegung der Welle in eine axiale Richtung bewegbar ist und wobei der Lamellenhalter durch eine Rückbewegung eine Abreinigung des Filters bewirkt. Es stellt einen wesentlichen Vorteil der vorgeschlagenen Staubsammelvorrichtung dar, dass diese Erschütterung zu einer Abreinigung des Filters führt.

Es ist im Sinne der Erfindung bevorzugt, dass die Werkzeugmaschine eine Staubabsaugung umfasst, wobei die Staubabsaugung dazu eingerichtet ist, einen Luftstrom zu erzeugen, mit dem Staub abgeführt wird. Die Staubabsaugung wird insbesondere dazu verwendet, dass der Staub aus dem Arbeitsbereich der Werkzeugmaschine abgesaugt werden kann. Dazu ist die Staubabsaugung der Werkzeugmaschine vorzugsweise dazu eingerichtet, einen Unterdruck zu erzeugen, der wiederum einen Luftstrom erzeugt. Mit diesem Luftstrom kann der Staub aus dem Arbeitsbereich der Werkzeugmaschine entfernt und in Richtung der Staubsammelvorrichtung geführt werden. Vorzugsweise ist in der Werkzeugmaschine ein Strömungskanal für den Luftstrom vorgesehen, durch den der Luftstrom von dem Arbeitsbereich zu der Staubsammelvorrichtung geführt wird. Vorzugsweise kann der Staub, der bei Betrieb der Werkzeugmaschine entsteht, in einem Sammelbehälter der Staubsammelvorrichtung gesammelt werden. Bei Eintritt in die Staubsammelvorrichtung ist es im Sinne der Erfindung bevorzugt, dass der Luftstrom gefiltert wird. Dazu kann im Eingangsbereich der Staubsammelvorrichtung bzw. des Sammelbehälters der Staubsammelvorrichtung ein Filter vorgesehen sein. Der Filter weist Lamellen auf, wobei ein wesentliches Verdienst der Lamellen darin besteht, die Oberfläche des Filters zu vergrößern und so die Filterleistung des Filters zu erhöhen. Dadurch kann der Luftstrom besonders wirksam gefiltert und von gröberen Staubpartikeln befreit werden.

Es ist im Sinne der Erfindung ganz besonders bevorzugt, dass der Filter dazu eingerichtet ist, Staub und/oder Staubpartikel aus einem in den Sammelbehälter der vorgeschlagenen Staubsammelvorrichtung führenden Luftstrom herauszufiltern. Es ist mit anderen Worten im Sinne der Erfindung bevorzugt, dass der Filter am Eingangsbereich des Sammelbehälters vorliegt, wobei der Luftstrom in diesem Eingangsbereich bevorzugt in den Sammelbehälter einmündet. Vorzugsweise stellt der Eingangsbereich des Sammelbehälters denjenigen Bereich des Sammelbehälters dar, in dem der Luftstrom in den Sammelbehälter eintritt und noch voll beladen mit Staub, Partikeln und/oder Gesteinsstückchen ist. Indem diese gröberen Staubpartikel aus dem Luftstrom herausgefiltert werden, kann die Funktionsweise der vorgeschlagenen Staubsammelvorrichtung verbessert und ihre Lebensdauer verlängert werden.

In einem weiteren Aspekt betrifft die Erfindung ein Verfahren zum Betrieb einer Werkzeugmaschine und zur Abreinigung eines Filters. Das Verfahren ist durch folgende Verfahrensschritte gekennzeichnet:
a) Betrieb der Werkzeugmaschine, wobei Staub, der bei Betrieb der Werkzeugmaschine entsteht, mittels eines Luftstroms abgeführt wird,
b) Filtern des Staubs aus dem Luftstrom mit einem Filter,
c) Initiierung der Abreinigung des Filters durch Betätigung eines Drehgriffs an einer Staubsammelvorrichtung, wobei durch die Betätigung des Drehgriffs eine Welle innerhalb der Staubsammelvorrichtung in eine Drehung versetzt wird,
d) Übertragung der Drehbewegung der Welle in eine axiale Bewegung eines Lamellenhalters, wobei die Lamellen des Filters durch die axiale Bewegung des Lamellenhalters eine Ursprungsposition verlassen,
e) Rückkehr der Lamellen des Filters in ihre Ursprungsposition durch eine Rückbewegung des Lamellenhalters,
f) Abreinigung des Filters durch die Rückkehr der Lamellen in ihre Ursprungsposition.

Es ist im Kontext des vorgeschlagenen Filterabreinigungsverfahrens bevorzugt, dass der Staub durch eine Staubabsaugung der Werkzeugmaschine aus einem Arbeitsbereich der Werkzeugmaschine abgesaugt werden kann. Dies wird insbesondere dadurch erreicht, dass von der Staubabsaugung ein Luftstrom erzeugt wird, mit dem der Staub aus dem Arbeitsbereich der Werkzeugmaschine abgeführt werden kann. Vorzugsweise wird der Staub in dem Sammelbehälter der Staubsammelvorrichtung gesammelt, wobei der Luftstrom beim Eintritt in den Sammelbehälter einen Filter passiert. Dabei kann es geschehen, dass sich der Filter bei langanhaltendem Betrieb der Werkzeugmaschine oder bei einer hohen Staubbeladung des Luftstroms zusetzt. Beispielsweise kann sich ein sogenannter Filterkuchen in dem Filter ausbilden. In dieser Situation ermöglicht die Erfindung vorteilhafterweise die Initiierung einer Abreinigung des Filters, wobei die Filterabreinigung insbesondere durch Betätigung eines Drehgriffs an einer Außenseite der Staubsammelvorrichtung gestartet wird. Beispielsweise kann der Drehgriff in einer Vertiefung des Gehäuses drehbar gelagert sein.

Es ist im Sinne der Erfindung bevorzugt, dass durch die Betätigung des Drehgriffs die Welle innerhalb der Staubsammelvorrichtung in eine Drehung versetzt wird. Die Welle liegt in Verbindung mit einem Lamellenhalter vor, wobei die Verbindung insbesondere von einem ersten Profil der Welle und einem zweiten Profil des Lamellenhalters gebildet wird. Die Profile stellen vorzugsweise zueinander korrespondierend ausgebildete Oberflächen dar, die sich gegenüberliegen und miteinander in Eingriff gelangen können. Vorzugsweise ist der Lamellenhalter drehfest gelagert. Auf diese Weise kann die Drehbewegung der Welle in eine Axialbewegung des Lamellenhalters umgewandelt werden. Der Lamellenhalter kann Mitnahmemittel aufweisen, die vorzugsweise dazu eingerichtet sind, die Lamellen des Filters ebenfalls zu einer axialen Bewegung in Bewegungsrichtung des Lamellenhalters zu veranlassen. Das Verlassen ihrer Ursprungsposition durch die Lamellen des Filters wird im Sinne der Erfindung bevorzugt auch als Mitnahme der Filterlamellen durch den Lamellenhalter bezeichnet. Dazu kann der Lamellenhalter Mitnahmemittel aufweisen, wobei die Mitnahmemittel in die Lamellen des Filters bzw. die Freiräume zwischen den Filterlamellen eingreifen können. Mit anderen Worten ist es im Sinne der Erfindung bevorzugt, dass eine Drehbewegung der Welle in eine axiale Bewegung von Lamellen des Filters umgewandelt wird, wobei die Lamellen des Filters durch die axiale Bewegung ihre Ursprungsposition verlassen. Vorzugsweise weist die Erfindung an der Welle ein erstes Profil und am Lamellenhalter ein zweites Profil auf, die eine Rückkehr der Lamellen des Filters in ihre Ursprungsposition ermöglichen, wenn die Profile durch eine Relativbewegung außer Eingriff zueinander geraten. Die Abreinigung des Filters kann vorteilhafterweise durch eine Erschütterung der Lamellen des Filters erfolgen, wobei die Erschütterung durch die Rückkehr der Lamellen in ihre Ursprungsposition bzw. eine Rückkehr des Lamellenhalters in seine Ursprungsposition hervorgerufen wird.

Die Definitionen, technischen Wirkungen und Vorteile, die für die vorgeschlagene Staubsammelvorrichtung beschrieben wurden, gelten für das Betriebs- und Abreinigungsverfahren, sowie für die Werkzeugmaschine analog.

Es ist im Sinne der Erfindung bevorzugt, dass der Lamellenhalter durch die axiale Bewegung gegen eine Feder gedrückt wird. Es stellt einen weiteren Vorteil der Erfindung dar, dass mit Hilfe der Feder die Rückbewegung des Lamellenhalters beeinflusst werden kann. Insbesondere können der Rüttelhub, die Rüttelfrequenz und die Beschleunigung des Lamellenhalters auf diese Weise gesteuert werden.

Es ist im Sinne der Erfindung bevorzugt, dass die Übertragung der Drehbewegung der Welle in die axiale Bewegung des Lamellenhalters unter Vermittlung eines ersten Profils der Welle und eines zweiten Profils des Lamellenhalters erfolgt. Vorzugsweise wird die Abreinigung des Filters durch eine Erschütterung der Filterlamellen bewirkt, wenn ein erstes Profil der Welle und ein zweites Profil des Lamellenhalters gegeneinander bewegt werden und nicht in Eingriff miteinander vorliegen. Es ist im Sinne der Erfindung bevorzugt, dass eine Mitnahme der Lamellen des Filters aus ihrer Ausgangs- oder Ursprungsposition heraus durch Mitnahmemittel des Lamellenhalters erfolgt. Diese können fingerartig oder als U-förmige Haken oder Ösen ausgebildet sein.

In einem Ausführungsbeispiel der Erfindung kann die Welle über einen außen am Gehäuse der Staubsammelvorrichtung angebrachten Drehgriff in Drehung versetzt werden. Auf der Welle ist axial verschiebbar ein Lamellenhalter angeordnet. Der Lamellenhalter weist vorzugsweise an der der Welle zugewandten Seite ein Sägezahnprofil auf, das im Kontext der vorliegenden Erfindung bevorzugt als zweites Profil bezeichnet wird. Die Welle weist an der dem Lamellenhalter zugewandten Seite ein Gegenprofil auf, das im Kontext der vorliegenden Erfindung bevorzugt als erstes Profil bezeichnet wird. Über das Sägezahnprofil des Lamellenhalters und das Gegenprofil der Welle wird bei Drehung der bevorzugt drehfest gelagerte Lamellenhalter axial gegen die Feder verschoben. Bei dieser Axialverschiebung des Lamellenhalters können die Lamellen des Filters mitgenommen werden. Sobald das Sägezahnprofil des Lamellenhalters und das Gegenprofil der Welle den Lamellenhalter freigeben, kann sich der Lamellenhalter durch die Kraft der Feder schlagartig in seine Ausgangsposition zurückbewegen und dabei die Filterlamellen mitnehmen. Durch die stoßartige Rückbewegung des Lamellenhalters wird der auf den Lamellen haftende Staub abgeschüttelt.

Weitere Vorteile der Erfindung ergeben sich aus der folgenden Figurenbeschreibung. In der Figur ist eine beispielhafte Ausführungsform der vorliegenden Erfindung dargestellt. Die Figur, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Fig. 1: Ansicht einer bevorzugten Ausführungsform der vorgeschlagenen Staubsammelvorrichtung (Explosionszeichnung)
- Fig. 2: Ansicht einer bevorzugten Ausführungsform der Welle und des Lamellenhalters, sowie ihrer Profile
- Fig. 3: Ansicht einer bevorzugten Ausführungsform des Lamellenhalters, der Feder und der Filterlamellen

### Ausführungsbeispiele und Figurenbeschreibung:

Fig. 1 zeigt die Ansicht einer bevorzugten Ausführungsform der vorgeschlagenen Staubsammelvorrichtung (1). Insbesondere zeigt Fig. 1 eine Explosionszeichnung der Staubsammelvorrichtung (1). Von oben links nach unten rechts zeigt Fig. 1 eine erste Hälfte des Gehäuses (9) der Staubsammelvorrichtung (1) bzw. des Sammelbehälters (2), die Feder (12), den Filter (3) und dessen Lamellen (4), sowie die Welle (5) und den Lamellenhalter (7) mit den Mitnahmemitteln (11), eine zweite Hälfte des Gehäuses (9) der Staubsammelvorrichtung (1) bzw. des Sammelbehälters (2), sowie den Drehgriff (8).

Es ist im Sinne der Erfindung bevorzugt, dass die beiden Teilhälften des Gehäuses (9) ein Raumvolumen umschließen, wobei in diesem geschlossenen Raumvolumen Staub aufgefangen und gesammelt werden kann. Insofern bilden die beiden Teilhälften des Gehäuses (9) vorzugsweise den Sammelbehälter (2) der Staubsammelvorrichtung (1). Der untere Bereich des Sammelbehälters (2) kann von einem Boden bzw. einer Schale gebildet werden. Ausgehend von dieser Unterseite des Sammelbehälters (2) kann sich eine Vorderseite der Staubsammelvorrichtung (1) erstrecken, in der ein Filter (3) angeordnet sein kann. Es ist im Sinne der Erfindung bevorzugt, dass die Vorderseite der Staubsammelvorrichtung (1) den Eingangsbereich (10) der Staubsammelvorrichtung (1) bildet, in den der staubbeladene Luftstrom mündet. Insbesondere kann der Filter (3) in einer Filteraufnahme angeordnet vorliegen. Bei dem Filter (3) handelt es sich vorzugsweise um einen Lamellenfilter, also bevorzugt um einen Filter (3), der Lamellen (4) aufweist. In dem in Fig. 1 dargestellten Ausführungsbeispiel der Erfindung weist der Filter (3) beispielsweise sechs Lamellen (4) auf, wobei sich zwischen den Lamellen (4) fünf Zwischenräume befinden. Es ist im Sinne der Erfindung bevorzugt, dass der Lamellenhalter (7), der mit der Welle (5) verbunden vorliegt, über Mitnahmemittel (11) verfügt, wobei der in Fig. 1 beispielhaft dargestellte Lamellenhalter (7) fünf Mitnahmemittel (11) umfasst. Dadurch kann jedes Mitnahmemittel (11) in einen Lamellenzwischenraum eingreifen und die Filterlamellen (4) bei Bewegung des Lamellenhalters (7) mitnehmen bzw. mitführen.

Die beiden Teilhälften des Gehäuses (9) können Öffnungen zur Aufnahme dieser Welle (5) aufweisen. Insbesondere kann die Welle (5) innerhalb der Staubsammelvorrichtung (1) drehbar gelagert sein, wobei die Welle (5) insbesondere durch einen Drehgriff (8) in Drehung versetzt werden kann. Der Drehgriff (8) kann beispielsweise von außen zugänglich sein und von einem Nutzer der Werkzeugmaschine (nicht dargestellt) manuell betätigt werden. Dazu kann der Nutzer den Drehgriff (8) insbesondere drehen. Der Drehgriff (8) ist innerhalb des Gehäuses (9) der Staubsammelvorrichtung (1) vorzugsweise drehbar gelagert. Dazu kann das Gehäuse (9) oder eines seiner Teilhälften eine Vertiefung zur Aufnahme des Drehgriffs (8) aufweisen. Vorteilhafterweise ist der Drehgriff (8) von außerhalb der Staubsammelvorrichtung (1) leicht zugänglich.

Durch die Betätigung des Drehgriffs (8) wird die Welle (5) in eine Drehbewegung versetzt. Die Welle (5) und der Lamellenhalter (7) weisen vorzugsweise sich gegenüberliegende Profile (13, 14) auf, die zueinander in Eingriff gelangen können. Vorzugsweise wird das Profil (13) der Welle (5) als erstes Profil bezeichnet, während das Profil (14) des Lamellenhalters (7) als zweites Profil bezeichnet werden kann. Die Profile (13, 14) sind vorzugsweise korrespondierend zueinander ausgebildet, beispielsweise als Sägezahnprofile. Es ist im Sinne der Erfindung bevorzugt, dass das zweite Profil (14) des Lamellenhalters (7) mit dem ersten Profil der Welle (5) in Eingriff gelangen kann, so dass der Lamellenhalter (7) durch eine Drehbewegung der Welle (5) in eine axiale Bewegung (6) versetzbar ist.

Der Lamellenhalter (7) kann Mitnahmemittel (11) aufweisen, die dazu eingerichtet sind, in die Zwischenräume zwischen den Lamellen (4) des Filters (3) der vorgeschlagenen Staubsammelvorrichtung (1) einzugreifen. Wenn sich die Mitnahmemittel (11) in Eingriff mit den Lamellen (4) des Filters (3) bzw. mit den Freiräumen zwischen den Lamellen (4) des Filters (3) befinden, erfolgt eine Mitnahme der Lamellen (4) durch den Lamellenhalter (7), wenn sich die Welle (5) dreht. Vor der Mitnahme der Lamellen (4) durch den Lamellenhalter (7) befinden sich die Filterlamellen (4) bevorzugt in einer Ausgangs- oder Ursprungsposition. Die Mitnahme der Filterlamellen (4) erzeugt eine axiale Bewegung (6) der Lamellen (4) des Filters (3), die in Fig. 1 als Doppelpfeil dargestellt ist. Der Doppelpfeil deutet an, dass sich die Lamellen (4) des Filters (3) durch die Mitnahme durch den Lamellenhalter (7) beispielsweise in Richtung der ersten Teilhälfte des Gehäuses (9) der Staubsammelvorrichtung (1) bewegen können. Vorzugsweise ist der Lamellenhalter (7) in Bezug auf die Welle (5) axial verschiebbar ausgebildet. Die axiale Bewegung (6) der Filterlamellen (4) erfolgt vorzugsweise im Wesentlichen parallel zu einer zentralen Achse, die gedacht durch die Welle (5) verläuft. Es ist im Sinne der Erfindung bevorzugt, dass die Mitnahme der Filterlamellen (4) endet, wenn das erste Profil (13) der Welle (5) und das zweite Profil (14) des Lamellenhalters (7) außer Eingriff zueinander geraten, d.h. nicht mehr in Eingriff miteinander vorliegen. Durch den fehlenden Kontakt der Profile (13, 14) vollzieht der Lamellenhalter (7) eine ruckartige Bewegung und die Filterlamellen (4) werden freigegeben. Das bedeutet im Sinne der Erfindung bevorzugt, dass die Lamellen (4) des Filters (3) in ihre Ausgangsposition zurückspringen können. Diese Rückbewegung der Filterlamellen (4) kann beispielsweise in Richtung der zweiten Teilhälfte des Gehäuses (9) der Staubsammelvorrichtung (1) erfolgen, wobei durch dieses Zurückschnellen der Lamellen (4) des Filters (3) diejenige Erschütterung hervorgerufen werden kann, die vorteilhafterweise dazu führt, dass sich Staub und Filterkuchen von den Lamellen (4) lösen und der Filter (3) abgereinigt wird. Mit anderen Worten kann es durch das Zurückspringen der Filterlamellen (4) in ihre Ausgangsposition insbesondere zu einer Erschütterung der Filterlamellen (4) kommen, durch die Staub und Filterkuchen vom Filter (3) gelöst werden. Der gelöste Staub bzw. Filterkuchen kann in den Sammelbehälter (2) der Staubsammelvorrichtung (1) fallen und mit der nächsten Leerung des Sammelbehälters (2) entsorgt werden.

Fig. 2 zeigt die Ansicht einer bevorzugten Ausführungsform der vorgeschlagenen Staubsammelvorrichtung (1), insbesondere der Welle und des Lamellenhalters, sowie ihrer Profile. In dem in Fig. 2 dargestellten Ausführungsbeispiel der Erfindung sind die beiden Profile (13, 14) als zueinander korrespondierend ausgebildete Sägezahnprofile ausgebildet. Die Profile (13, 14) weisen Kontaktflächen auf, die vorzugsweise von schiefen Ebenen gebildet werden. Der Fachmann kennt den Begriff der «schiefen Ebene». Fig. 2 zeigt, wie sich das erste Profil (13) der Welle (5) und das zweite Profil (14) des Lamellenhalters (7) gegenüberliegen können. Bei Kontakt zwischen den Profilen (13, 14) kann insbesondere ein höchster Punkt einer Kontaktfläche des einen Profils (13 oder 14) in Kontakt mit einem tiefsten Punkt einer Kontaktfläche des anderen Profils (14 oder 13) vorliegen. Durch eine Relativbewegung der Profile (13, 14) zueinander werden die Kontaktflächen so lange entlang einander bewegt, bis ein höchster Punkt einer der schiefen Ebenen erreicht ist und der höchste Punkt der gegenüberliegenden Kontaktfläche des anderen Profils auf die nächste Kontaktfläche bzw. deren tiefsten Punkt herunterfällt. Dieses Herabfallen führt zu der ruckartigen Bewegung des Lamellenhalters (7), welches zu der Erschütterung der Filterlamellen (4) und der Filterabreinigung führt.

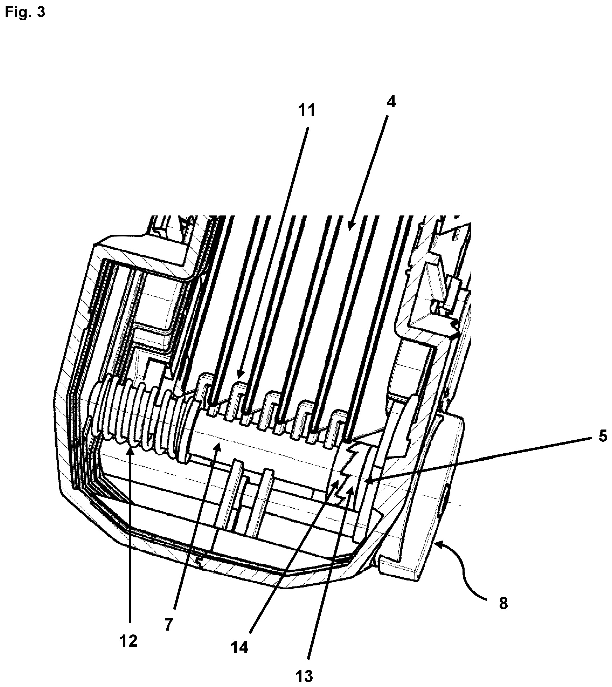

Fig. 3 zeigt eine Ansicht einer bevorzugten Ausführungsform des Lamellenhalters (7) mit Mitnahmemitteln (11). Der in Fig. 3 abgebildete Lamellenhalter (7) weist insbesondere fünf Mitnahmemittel (11) auf, die mit den Zwischenräumen der Filterlamellen (4) in Eingriff gelangen bzw. zusammenwirken können, um eine Drehbewegung der Welle (5) in eine axiale Bewegung (6) der Lamellen (4) umzuwandeln. Ferner ist in Fig. 3 die Feder (12) dargestellt, gegen die der Lamellenhalter (7) durch seine axiale Bewegung (6) gedrückt werden kann.

### Bezugszeichenliste

- 1: Staubsammelvorrichtung
- 2: Sammelbehälter
- 3: Filter
- 4: Lamellen
- 5: Welle
- 6: axiale Bewegung
- 7: Lamellenhalter
- 8: Drehgriff
- 9: Gehäuse
- 10: Eingangsbereich
- 11: Mitnahmemittel
- 12: Feder
- 13: erstes Profil der Welle
- 14: zweites Profil des Lamellenhalters

## Patentansprüche

1. Staubsammelvorrichtung (1) für eine Werkzeugmaschine, wobei die Staubsammelvorrichtung (1) einen Sammelbehälter (2) zur Aufnahme von Staub aufweist,
**dadurch gekennzeichnet, dass**
in dem Sammelbehälter (2) ein Filter (3) mit Lamellen (4), sowie eine drehbare Welle (5) angeordnet vorliegen, wobei die Welle (5) mit einem Lamellenhalter (7) in Verbindung steht, wobei der Lamellenhalter (7) durch eine Drehbewegung der Welle (5) in eine axiale Richtung (6) bewegbar ist und wobei der Lamellenhalter (7) durch eine Rückbewegung eine Abreinigung des Filters (3) bewirkt.

2. Staubsammelvorrichtung (1) nach Anspruch 1,
**dadurch gekennzeichnet, dass**
in dem Sammelbehälter (2) ferner eine Feder (12) vorliegt, gegen die der Lamellenhalter (7) bei seiner Bewegung in axiale Richtung (6) drückbar ist.

3. Staubsammelvorrichtung (1) nach Anspruch 1 oder 2,
**dadurch gekennzeichnet, dass**
die Welle (5) ein erstes Profil (13) aufweist und der Lamellenhalter (7) ein zweites Profil (14) aufweist, wobei das erste Profil (13) und das zweite Profil (14) zueinander korrespondierend ausgebildet sind.

4. Staubsammelvorrichtung (1) nach Anspruch 3,
**dadurch gekennzeichnet, dass**
das zweite Profil (14) des Lamellenhalters (7) mit dem ersten Profil der Welle (5) in Eingriff gelangen kann, so dass der Lamellenhalter (7) durch eine Drehbewegung der Welle (5) in eine axiale Bewegung (6) versetzbar ist.

5. Staubsammelvorrichtung (1) nach einem der vorhergehenden Ansprüchen,
**dadurch gekennzeichnet, dass**
der Lamellenhalter (7) drehfest gelagert ist.

6. Staubsammelvorrichtung (1) nach einem der vorhergehenden Ansprüchen,
**dadurch gekennzeichnet, dass**
der Lamellenhalter (7) Mitnahmemittel (11) aufweist, wobei die Mitnahmemittel (11) dazu eingerichtet sind, in die Lamellen (4) des Filters (3) bzw. in Freiräumen zwischen den Lamellen (4) des Filters (3) einzugreifen.

7. Staubsammelvorrichtung (1) nach einem der vorhergehenden Ansprüchen,
**dadurch gekennzeichnet, dass**
der Sammelbehälter (2) einen Drehgriff (8) aufweist, wobei der Drehgriff (8) dazu eingerichtet ist, die Welle (5) in eine Drehung zu versetzen.

8. Staubsammelvorrichtung (1) nach Anspruch 7,
**dadurch gekennzeichnet, dass**
der Drehgriff (8) in einem Gehäuse (9) des Sammelbehälters (2) vorliegt.

9. Staubsammelvorrichtung (1) nach einem der vorhergehenden Ansprüchen,
**dadurch gekennzeichnet, dass**
der Filter (3) in einem Eingangsbereich (10) des Sammelbehälters (2) der Staubsammelvorrichtung (1) angeordnet vorliegt.

10. Werkzeugmaschine
**dadurch gekennzeichnet, dass**
die Werkzeugmaschine eine Staubsammelvorrichtung (1) nach einem der vorhergehenden Ansprüche aufweist.

11. Verfahren zum Betrieb einer Werkzeugmaschine und zur Abreinigung eines Filters (3) **gekennzeichnet durch die folgenden Verfahrensschritte:**
a) Betrieb der Werkzeugmaschine, wobei Staub, der bei Betrieb der Werkzeugmaschine entsteht, mittels eines Luftstroms abgeführt wird,
b) Filtern des Staubs aus dem Luftstrom mit einem Filter (3),
c) Initiierung der Abreinigung des Filters (3) durch Betätigung eines Drehgriffs (8) an einer Staubsammelvorrichtung (1), wobei durch die Betätigung des Drehgriffs (8) eine Welle (5) innerhalb der Staubsammelvorrichtung (1) in eine Drehung versetzt wird,
d) Übertragung der Drehbewegung der Welle (5) in eine axiale Bewegung (6) eines Lamellenhalters (7), wobei die Lamellen (4) des Filters (3) durch die axiale Bewegung (6) des Lamellenhalters (7) eine Ursprungsposition verlassen,
e) Rückkehr der Lamellen (4) des Filters (3) in ihre Ursprungsposition durch eine Rückbewegung des Lamellenhalters (7),
f) Abreinigung des Filters (3) durch die Rückkehr der Lamellen (4) in ihre Ursprungsposition.

12. Verfahren nach Anspruch 11
**dadurch gekennzeichnet, dass**
der Lamellenhalter (7) durch die axiale Bewegung (6) gegen eine Feder (12) gedrückt wird.

13. Verfahren nach einem der Ansprüche 11 oder 12
**dadurch gekennzeichnet, dass**
die Übertragung der Drehbewegung der Welle (5) in die axiale Bewegung (6) des Lamellenhalters (7) unter Vermittlung eines ersten Profils der Welle (5) und eines zweiten Profils (14) des Lamellenhalters (7) erfolgt.

14. Verfahren nach einem der Ansprüche 11 bis 13
**dadurch gekennzeichnet, dass**
die Abreinigung des Filters (3) durch eine Erschütterung der Lamellen (4) des Filters (3) bewirkt wird, wenn ein erstes Profil (13) der Welle (5) und ein zweites Profil (14) des Lamellenhalters (7) gegeneinander bewegt werden und nicht in Eingriff miteinander vorliegen.

15. Verfahren nach einem der Ansprüche 11 bis 14
**dadurch gekennzeichnet, dass**
eine Mitnahme der Lamellen (4) des Filters (3) durch Mitnahmemittel (11) des Lamellenhalters (7) erfolgt.
